Europäisches Patentamt

European Patent Office

Office européen des brevets

(11) Veröffentlichungsnummer: **0 211 214**
**A2**

(12) **EUROPÄISCHE PATENTANMELDUNG**

(21) Anmeldenummer: **86108631.2**

(22) Anmeldetag: **25.06.86**

(51) Int. Cl.⁴: **C08G 59/50**

(30) Priorität: **29.06.85 DE 3523318**

(43) Veröffentlichungstag der Anmeldung:
**25.02.87 Patentblatt 87/09**

(84) Benannte Vertragsstaaten:
**BE CH DE FR GB IT LI NL**

(71) Anmelder: **BASF Aktiengesellschaft**
**Carl-Bosch-Strasse 38**
**D-6700 Ludwigshafen(DE)**

(72) Erfinder: **Stutz, Herbert, Dr.**
**Im Eichbaeumle 93**
**D-7500 Karlsruhe(DE)**
Erfinder: **Tesch, Helmut, Dr.**
**Goethestrasse 12**
**D-6701 Birkenheide(DE)**
Erfinder: **Neumann, Peter, Dr.**
**Franz-Schubert-Strasse 1**
**D-6908 Wiesloch(DE)**
Erfinder: **Schaefer, Gerhard, Dr.**
**Schafrippel 2**
**D-6900 Heidelberg(DE)**

(54) **Härtbare Epoxidharzmischungen.**

(57) Härtbare Epoxidharzmischung, enthaltend

A. Diglycidylether des Bisphenols A oder des 4,4'-Dihydroxydiphenylsulfons,

B. 4,4'-Diaminodiphenylsulfon oder -keton, wobei das molare Verhältnis der Aminprotonen zu den Epoxidgruppen zwischen 1,2 und 1,6 : 1 liegt.

Aus den Epoxidharzmischungen lassen sich durch Tränken von Verstärkungsfasern und anschließendes thermisches Aushärten Verbundwerkstoffe mit Glastemperaturen von mindestens 170 °C und Schlagzähigkeiten der Kunststoffmatrix von mindestens 50 KJ/m² herstellen.

## Härtbare Epoxidharzmischungen

Die Erfindung betrifft. Epoxidharzmischungen zur Herstellung von Verbundwerkstoffen mit verbesserter Zähigkeit.

Die Herstellung von Verbundwerkstoffen durch Tränken von Verstärkungsfasern mit Mischungen von Epoxidharzen und Härtern und nachfolgender thermischer Aushärtung ist bekannt. Die nach dem Stand der Technik bekannten Epoxidharzmischungen weisen jedoch Nachteile auf, die eine breitere Anwendung häufig erheblich beeinträchtigen.

In einer Reihe von Anwendungen, wie z.B. in der Luft-und Raumfahrt oder im Maschinenbau, werden hohe Anforderungen an das Material hinsichtlich der Wärmeformbeständigkeit gestellt. Höherfunktionelle Epoxide wie z.B. Tetraglycidyl-Diaminodiphenylmethan genügen diesen Anforderungen, die gehärteten Harze sind jedoch außerordentlich spröde. Andererseits ist es zwar möglich, durch Flexibilisierung mit geeigneten höhermolekularen Härtern oder Harzen eine Verbesserung der Zähigkeit zu erzielen, allerdings geht dies auf Kosten der Wärmeformbeständigkeit, so daß diese Materialien nur noch für Überzüge eingesetzt werden können, aber nicht mehr den hohen Anforderungen· für Verbundwerkstoffe genügen.

Da jedoch die Anforderungen an die mechanische Belastbarkeit von Verbundwerkstoffen ständig steigen, besteht ein dringender Bedarf an geeigneten Harzmatrices für Verbundwerkstoffe, welche gleichzeitig hohe Zähigkeiten und Wärmeformbeständigkeiten aufweisen. Der Erfindung lag deshalb die Aufgabe zugrunde, härtbare Epoxidharzmischungen zu entwickeln, die geeignet sind zur Herstellung von Verbundwerkstoffen mit Glastemperaturen von mindestens 170°C und Schlagzähigkeiten der Kunststoffmatrix von mindestens 50 KJ/m².

In der GB-A-1,017,699 sind härtbare Epoxidharzmischungen beschrieben aus einem Epoxidharz, einem Aminhärter und einer aromatischen Hydroxycarbonsäure als Härtungsbeschleuniger. Bevorzugtes Epoxidharz ist der Diglycidylether von Bisphenol A, bevorzugte Härter sind u.a. Diaminodiphenylsulfon und Diaminodiphenylketon. Das Verhältnis der Aminprotonen zu den Epoxidgruppen kann in einem weiten Bereich zwischen 0,5 und 2,4 : 1 liegen, vorzugsweise soll es etwa 1 : 1 betragen. In den Beispielen liegt das Verhältnis zwischen 0,73 und 1,12 : 1. Formkörper, die aus den Epoxidharzmischungen nach diesen Beispielen durch Aushärten hergestellt werden, zeigen zwar eine ausreichend hohe Wärmeformbeständigkeit, die Schlagzähigkeit liegt jedoch bei Werten unterhalb von 40 KJ/m².

Gegenstand der Erfindung sind härtbare Epoxidharzmischungen, enthaltend

A) Diglycidylether des Bisphenols A oder des 4,4'-Dihydroxydiphenylsulfons mit Molekulargewichten zwischen 340 und 450,

B) 4,4'-Diaminodiphenylsulfon oder -keton, sowie

C) gegebenenfalls Beschleuniger, Hilfs-und Zusatzstoffe, wobei das molare Verhältnis der Aminoprotonen zu den Epoxidgruppen zwischen 1,2 und 1,6, vorzugsweise zwischen 1,3 und 1,5 liegt.

Dieser Befund ist überraschend, da weder aus der vorliegenden Patentliteratur noch der einschlägigen Fachliteratur ein Hinweis abzuleiten ist, daß sich mit den ausgewählten molaren Verhältnissen gleichzeitig hohe Zähigkeiten und Wärmeformbeständigkeiten erzielen lassen.

Geeignete Diepoxide sind die nach dem Stand der Technik bekannten Diglycidylether des Bisphenols A sowie die des 4,4'-Dihydroxydiphenylsulfons mit Molekulargewichten zwischen 340 und 450. Sie lassen sich wie üblich durch Umsetzung der Hydroxyverbindungen mit Epichlorhydrin und nachfolgender Dehydrochlorierung herstellen. Die Epoxide können dabei sowohl allein als auch in beliebigen Mischungen untereinander zur Anwendung gelangen. Sie können bis zu 20, vorzugsweise weniger als 10 Mol% anderer üblicher difunktioneller Epoxidharze zugemischt enthalten.

Geeignete Aminhärter sind 4,4'-Diaminodiphenylsulfon und 4,4'-Diaminodiphenylketon, welche allein oder in beliebigen Mischungen untereinander zur Anwendung gelangen können. Die genannten Amine können synthesebedingt noch kleine Mengen der entsprechenden 2,4'-oder bzw. 2,2'-Isomeren enthalten; das 4,4'-Isomere wird jedoch bevorzugt.

In der Epoxidharzmischung kann der Aminhärter als homogene Lösung vorliegen, er kann jedoch auch gemäß DE-A-34 24 700 mikrokristallin mit Teilchengrößen unter 5 μm im Harz dispergiert sein. Diese Arbeitsweise ist besonders vorteilhaft zur Herstellung von lagerstabilen Mischungen.

Den Harzmischungen können ferner bei Bedarf zur Beschleunigung der Aushärtung noch die bekannten und üblichen Beschleuniger zugesetzt werden, z.B. Säuren wie Adipinsäure, Benzoesäure, Salicylsäure, Cyanessigsäure und ähnliche oder Lewis-Säuren wie BF₃ oder deren Aminkomplexe.

Die Beschleuniger können dabei in Mengen von 0 bis 5 Gew.%, vorzugsweise zwischen 0,1 und 2 Gew.%, bezogen auf die Mischung, angewandt werden.

Den Harzmischungen können ferner noch die nach dem Stand der Technik bekannten und üblichen Hilfs-und Zusatzstoffe zugesetzt werden, wie z.B. Polymere zur Modifizierung des Fließverhaltens, vorzugsweise hochtemperaturbeständige Thermoplaste, ferner reaktive Kautschuke zur Kautschukmodifizierung, Farbstoffe und Pigmente, Alterungs-und Flammschutzmittel.

Zur Herstellung der Mischungen werden zweckmäßigerweise Harz und Härter in einem Reaktionsgefäß gemischt, zur Entfernung gelöster Gase unter Vakuum gerührt und auf Temperaturen um etwa 80 bis 120°C erwärmt, bis eine homogene Lösung entstanden ist. Nach Zugabe des Beschleunigers kann dann die Mischung entweder sofort weiterverarbeitet werden oder aber zur Verhinderung von unerwünschten Weiterreaktionen gekühlt zwischengelagert werden. Soll der Härter als mikrokristalline Dispersion im Harz vorliegen, dann kann der Härter beispielsweise auch durch Naßmahlung in geeigneten Aggregaten in das Harz eingearbeitet werden. Zur Herstellung von Verbundwerkstoffen werden Verstärkungsfasern, vorzugsweise solche aus Kohlenstoff, Glas oder aromatischem Polyamid, mit den erfindungsgemäßen Epoxidharzmischungen getränkt und diese anschließend gehärtet.

Die Härtung erfolgt thermisch durch Erhitzen auf Temperaturen zwischen 120 und 250°C, wobei ein Bereich zwischen 150 und 200°C bevorzugt wird. Die erforderlichen Härtungszeiten können je nach System und Härtungstemperatur zwischen wenigen Minuten und mehreren Stunden betragen, optimale Eigenschaften werden nach mehrstündiger Härtung erzielt. Die erforderlichen Härtungsbedingungen können leicht durch einige Vorversuche ermittelt werden.

Die erfindungsgemäßen Harzmischungen ergeben nach der Härtung Formkörper mit sehr hohen Schlagzähigkeiten und Bruchdehnungen bei gleichzeitig hohen Glastemperaturen. Daraus hergestellte Verbundwerkstoffe weisen deutlich reduzierte Schlagempfindlichkeiten auf.

Beispiel 1

In einem Rührgefäß mit Thermometer und Vakuumanschluß werden 200 g eines handelsüblichen Bisphenol-A-Diglycidylethers mit einem Molekulargewicht von 380 (®Epikote 828, Shell) vorgelegt und 93,8 g 4,4'-Diaminodiphenylsulfon eingerührt. Das NH/Epoxid-Verhältnis beträgt 1,45. Die Mischung wird unter Vakuum auf 120°C erwärmt, bis eine homogene Lösung entstanden ist. Anschließend werden 2 g Salicylsäure zugesetzt, homogenisiert und die Schmelze in vorgeheizten Formen zu 4 mm dicken Platten vergossen. Zur Härtung wird das Material zwei Stunden bei 120°C und 10 Stunden bei 180°C nachgeheizt. Das Material weist nach der Härtung folgende Kenndaten auf:

| | | |
|---|---|---|
| Glastemperatur | (DSC-Methode) | 180°C |
| Schlagzähigkeit | (DIN 53453) | 100 KJ/$m^2$ |
| Zugfestigkeit | (DIN 53455) | 100 N/$mm^2$ |
| Bruchdehnung | (DIN 53455) | 7,7 % |
| Wasseraufnahme | (110 Tage Wasserlagerung, 70°C) | 3,4 % |

Beispiel 2

Es wird wie in Beispiel 1 gearbeitet, wobei jedoch wechselnde Mengen Diaminodiphenylsulfon eingesetzt werden.

Die Tabelle zeigt die Glastemperatur und die Schlagzähigkeit in Abhängigkeit vom molaren NH/Epoxid-Verhältnis:

| NH : Epoxid | Glastemperatur °C | Schlagzähigkeit KJ/m$^2$ |
|---|---|---|
| 1,0 | 197 | 30 |
| 1,2 | 196 | 51 |
| 1,4 | 183 | 95 |
| 1,6 | 170 | 100 |
| 1,8 | 160 | 98 |
| 2,0 | 151 | 30 |

Überraschenderweise weist die Schlagzähigkeit ein Maximum bei einem NH : Epoxidverhältnis zwischen 1,4 und 1,8 auf. Bei dem Verhältnis von 1,8 ist jedoch die Glastemperatur auf 160°C abgefallen.

Verbundkörper, die aus Verstärkungsfasern und wärmehärtbaren Epoxidharzmischungen hergestellt worden sind, werden in der Praxis häufig gleichzeitig dem Einfluß von Feuchtigkeit und erhöhten Temperaturen ausgesetzt. Die Feuchtigkeit verursacht dabei eine Weichmachung des Harzes, wodurch die Wärmeformbeständigkeit abnimmt. Dabei hat sich gezeigt, daß eine Glastemperatur von 170°C in trockenem Zustand als gerade noch ausreichend für die Anforderungen, wie sie z.B. in der Luftfahrt auftreten, angesehen werden kann, damit das Teil auch unter heiß/feucht-Bedingungen noch seine Funktionsfähigkeit behält.

Beispiel 3

In der in Beispiel 1 beschriebenen Apparatur werden 300 g Epikote 828 vorgelegt und auf 80°C erwärmt. Anschließend werden 108,8 g (Amin/Epoxid-Verhältnis = 1,3) fein gemahlenes 4,4'-Diaminodiphenylketon (Korngröße <3 μ) eingerührt und mit einer Dissolverscheibe 30 min dispergiert. Die Mischung wird anschließend bei 80°C entgast und zu 4 mm dicken Platten vergossen. Das Material wird 90 min bei 155°C und 12 h bei 180°C ausgehärtet, es weist dann folgende Kenndaten auf:

Glastemperatur 187°C

Schlagzähigkeit 81 KJ/m²

Beispiel 4

Beispiel 2 wird wiederholt unter Anwendung folgender Mengenverhältnisse:

300 g Epikote 828

125,5 g 4,4'-Diaminodiphenylketon

Das Amin/Epoxid-Verhältnis beträgt hier 1,5; nach der Härtung weist das Material folgende Kenndaten auf:

Glastemperatur 176°C

Schlagzähigkeit 95 KJ/m²

Beispiel 5

Beispiel 1 wird wiederholt unter Anwendung folgender Komponenten und Mengenverhältnisse:

140 g Epikote 828

60 g 4,4'-Dihydroxydiphenylsulfon-Diglycidylether - (Molekulargewicht 410)

89,4 g 4,4'-Diaminodiphenylsulfon

1 g Salicylsäure

Das Amin/Epoxid-Verhältnis beträgt bei diesem Versuch 1,4. Die Härtung erfolgt 2 h bei 130 und 3 h bei 200°C, das Material weist dann folgende Kenndaten auf:

Glastemperatur 200°C

Schlagzähigkeit 75 KJ/m²

**Ansprüche**

1. Härtbare Epoxidharzmischung, enthaltend
   A. Diglycidylether des Bisphenols A oder des 4,4'-Dihydroxydiphenylsulfons mit Molekulargewichten zwischen 340 und 450,
   B. 4,4'-Diaminodiphenylsulfon oder 4,4'-Diaminodiphenylketon, sowie gegebenenfalls
   C. übliche Beschleuniger, Hilfs-und Zusatzstoffe,
   dadurch gekennzeichnet, daß das molare Verhältnis der Aminprotonen zu den Epoxidgruppen zwischen 1,2 und 1,6 : 1 liegt.

2. Verfahren zur Herstellung von Verbundwerkstoffen mit Glastemperaturen von mindestens 170°C und Schlagzähigkeiten der Kunststoffmatrix von mindestens 50 KJ/m² durch Tränken von Verstärkungsfasern mit der Epoxidharzmischung nach Anspruch 1 und nachfolgender thermischer Aushärtung.